Europäisches Patentamt

(19) European Patent Office

Office européen des brevets

(11) Veröffentlichungsnummer: **0 008 781**
**B1**

(12) **EUROPÄISCHE PATENTSCHRIFT**

(45) Veröffentlichungstag der Patentschrift:
**20.07.83**

(21) Anmeldenummer: **79103223.8**

(22) Anmeldetag: **31.08.79**

(51) Int. Cl.³: **A 22 C 13/02**

(54) **Radial aufweitbares Rohrdorn zum längsweisen Raffen von flexiblem Schlauchmaterial, insbesondere Kunstdarm für die Wurstherstellung.**

(30) Priorität: **01.09.78 DE 2838147**

(43) Veröffentlichungstag der Anmeldung:
**19.03.80 Patentblatt 80/6**

(45) Bekanntmachung des Hinweises auf die Patenterteilung:
**20.07.83 Patentblatt 83/29**

(84) Benannte Vertragsstaaten:
**AT BE CH FR GB IT NL SE**

(56) Entgegenhaltungen:
**DE-B-1 177 029**
**DE-B-1 187 947**
**DE-C-913 033**
**FR-A-1 546 258**
**US-A-1 616 971**
**US-A-1 876 279**
**US-A-1 933 480**
**US-A-3 203 807**

(73) Patentinhaber: **Kollross, Günter, Am Wallerstädter Weg 20, D-6080 Gross Gerau-Dornheim (DE)**

(72) Erfinder: **Senders, Henricus Hermanus Hubertus, Admetuslaan 28, Eindhoven (NL)**

(74) Vertreter: **Beyer, Werner, Dipl.-Ing. et al, Staufenstrasse 36, II P.O. Box 174109, D-6000 Frankfurt/Main (DE)**

## Radial aufweitbarer Rohrdorn zum längsweisen Raffen von flexiblem Schlauchmaterial, insbesondere Kunstdarm für die Wurstherstellung

Die Erfindung betrifft einen radial aufweitbaren Rohrdorn zum längsweisen Raffen von flexiblem Schlauchmaterial, insbesondere Kunstdarm für die Wurstherstellung. Ein solcher Rohrdorn ist aus der US-A-1 876 279 bekannt.

Rohrdorne werden sowohl beim Raffen von Hand als auch beim maschinellen Raffen verwendet, um das Schlauchmaterial bei der Faltenbildung während des Raffens abzustützen und die gebildete Raupe in Hinblick auf ihre spätere Anbringung beispielsweise auf dem Füllstutzen einer Wurstfüllmaschine zu kalibrieren. Dabei kommen die nach einwärts gelegten Falten in enge Anlage gegen die Dornoberfläche, was insbesondere beim maschinellen Raffen das spätere Abziehen der Raupe vom Rohrdorn erschwert.

Der bekannte radial aufweitbare Rohrdorn versucht dieses Problem bereits durch Teilung des Rohrdorns längs zweier diametral gelegener Fugen in zwei Rohrdornhälften zu lösen, die durch ein sich über die gesamte Rohrlänge erstreckendes drehbares Spreizglied quer zur Teilungsebene auf den vollen Kreisringquerschnitt auseinandergedrückt werden können. Durch Drehen des Spreizgliedes um 90° aus der Spreizlage vermögen sich die Rohrhälften mit ihren Längskanten aneinander zu legen, wodurch ihr Durchmesser lotrecht zur Teilungsebene vermindert wird. In der Teilungsebene selbst bleibt der Durchmesser jedoch praktisch unverändert, so dass das spätere Abziehen der auf dem Rohrdorn hergestellten Raupe nur unwesentlich erleichtert wird.

Es ist auch bereits ein durch eine diametrale Längsfuge in zwei Hälften geteilter Volldorn bekannt (US-A-1 616 971) der eine von einem Ende ausgehende und sich etwa über ein Drittel seiner Länge erstreckende zentrale Bohrung zur Einführung eines Spreizgliedes aufweist. Dieser Dorn hat demnach im aufgeweiteten Zustand nicht mehr Kreisquerschnitt, was beim Raffen zu einer ungleichmässigen Faltenverteilung mit entsprechend verminderter Raffdichte und beim anschliessenden Abziehen der Raupe vom wieder auf Kreisquerschnitt verengten Dorn ebenfalls nicht zu der gewünschten allseitigen Freigabe der Raupe auf dem gesamten Dornumfang führt.

Bei beiden vorbekannten radial aufweitbaren Dornen besteht ausserdem die Gefahr, dass das geraffte Material zwischen den Dornhälften eingeklemmt und beschädigt wird.

Aufgabe der Erfindung ist es, einen radial aufweitbaren Rohrdorn zu schaffen, der durch allseitige Aufweitbarkeit bzw. Durchmesserverminderung ein äusserst leichtes und zugleich beschädigungsfreies Abziehen der gerafften Raupen gestattet.

Erfindungsgemäss wird diese Aufgabe gelöst durch die kennzeichnenden Merkmale des Patentanspruchs 1.

Die Erfindung schafft somit einen radial aufweitbaren Rohrdorn, dessen Querschnitt für den Raffvorgang nach allen Richtungen aufgeweitet und anschliessend durch einfaches Verschieben des Steuergliedes in seinen verengten oder verjüngten Zustand verstellt wird, der kleiner als der Querschnitt der gerafften Raupe ist und damit ein leichtes Ablösen derselben ermöglicht.

Weitere vorteilhafte Ausgestaltungen der Erfindung ergeben sich aus den Unteransprüchen 2 bis 9.

Ein bevorzugtes Auführungsbeispiel des erfindungsgemässen Rohrdorns wird nachstehend in Verbindung mit der Zeichnung näher erläutert. Es zeigen:

Fig. 1: im Axialschnitt das Einspannende des Rohrdorns mit einem Halteglied zur Befestigung beispielsweise an einer Raffmaschine und dem Betätigungsmechanismus für das Stellglied,

Fig. 2: im Axialschnitt das freie Ende des Rohrdorns,

Fig. 3 in grösserem Massstab einen Querschnitt durch den Rohrdorn nach Linie II–II in Fig. 1, wobei die rechte Hälfte der Fig. 2 den Rohrdorn im aufgeweiteten Zustand entsprechend der in Fig. 1 und 2 gezeigten Stellung des Steuergliedes und die linke Hälfte den Rohrdorn im verjüngten Zustand bei gegenüber Fig. 1 und 2 verschobenem Steuerglied wiedergeben,

Fig. 4 und 5: im gleichen Massstab wie Fig. 3 Ausschnitte aus Fig. 1 bzw. 2 mit längsgeschnittenem Steuerglied in dessen beiden Verteillagen.

In der Zeichnung ist mit 10 eine als Drehteil ausgebildete Halterung bezeichnet, in deren am hinteren Ende durch einen Deckel 11 verschlossene Bohrung 12 eine Zentrierhülse 13 eingesetzt und mit Schrauben 14 befestigt ist. Die Zentrierhülse 13 umschliesst eine Anzahl, beispielsweise vierzehn Runddrähte aus Federstahl, die an der Zentrierhülse angeschweisst oder angelötet sind. Die Runddrähte 15 ragen aus dem vorderen Ende der Bohrung 12 weit, beispielsweise bis zu einem Meter oder gegebenenfalls noch weiter, heraus und sind mit den freien Enden an einer schulterförmig abgesetzten Zentriermuffe 16 angeschweisst oder angelötet, deren freies Ende konisch verjüngt ist. Auf diese Weise bilden die Runddrähte 15 einen rohrförmigen Dorn zum längsweisen Raffen von flexiblem Schlauchmaterial, wie insbesondere Kunstdarm für die Wurstherstellung.

Im Zentrum dieses Dorns ist ein Steuerrohr 17 axial verschieblich angeordnet. Das verjüngte vordere Ende 18 des Steuerrohrs 17 ist in der Zentriermuffe 16 verschieblich geführt. Im Bereich der Halterung 10 ist das Stuerrohr 17 in einer Buchse 19 innerhalb der Zentrierhülse 13 geführt und ragt mit seinem hinteren Ende aus der Halterung 10 heraus, wo es über eine Koppel 20 von einem Betätigungshebel 21 erfasst wird, der bei 22 an einer Konsole 23 angelenkt ist, die an der Halterung festgeschraubt ist.

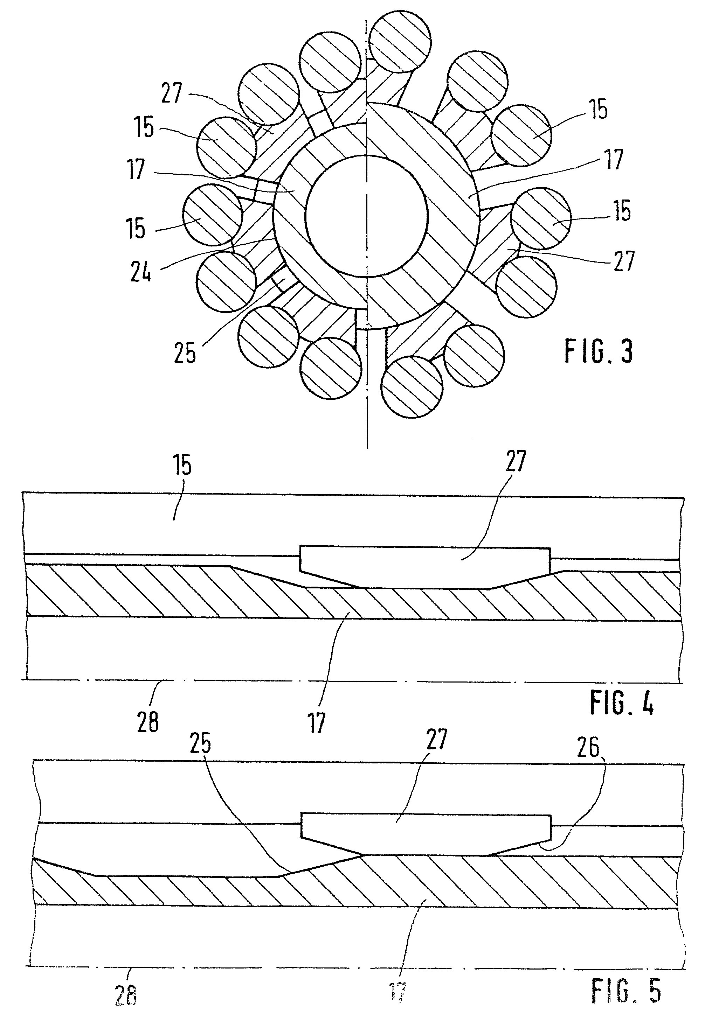

Das Steuerrohr 17 ist in vorzugsweise gleichen Längsabständen mit mehreren Eindrehungen 24 unter Ausbildung konischer Nockenflächen 25 versehen. Diese wirken, wie insbesondere die Fig. 4 und 5 zeigen, mit Nockenflächen 26 an Nockengliedern 27 zusammen, welche an je zwei Runddrähten 15 angeschweisst oder angelötet sind. In gleichen Abständen wie die Eindrehungen 24 ist je ein Kranz solcher Nockenglieder 27 im Inneren des von den Runddrähten 15 gebildeten Rohrdorns angeordnet.

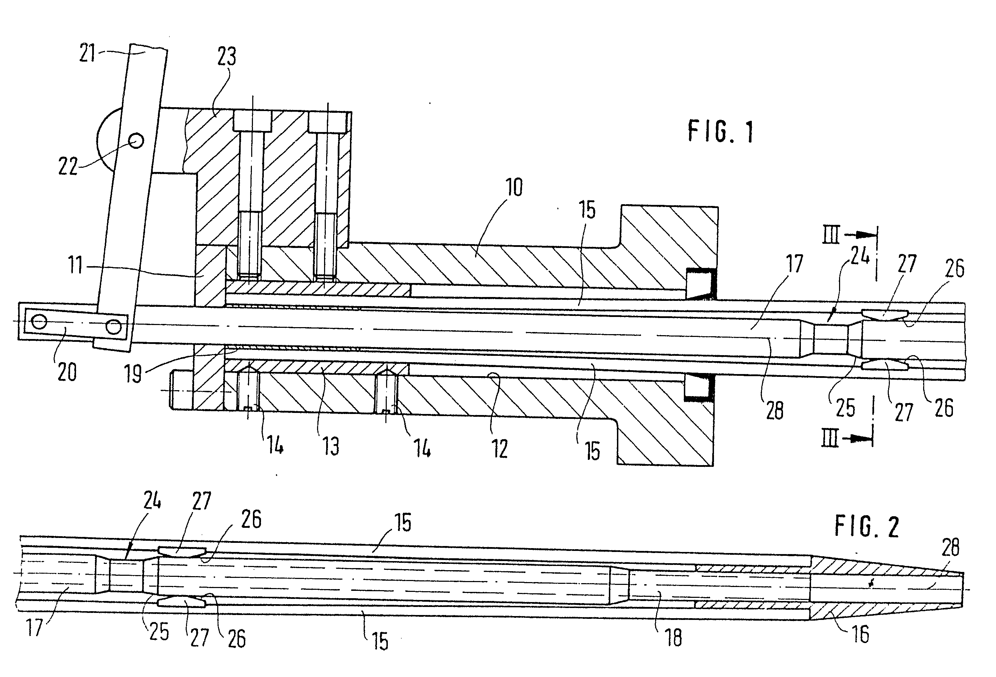

In der in Fig. 1, 2 und 5 sowie der rechten Hälfte der Fig. 3 gezeigten Stellung des Steuerrohrs 17 ruhen dei Nockenglieder 27 auf der unverjüngten Aussenfläche des Steuerrohrs 17. Hierdurch werden die Runddrähte 15 radial nach auswärts mit Bezug auf die Dornachse 28 gespreizt, und der Dorn wird im gesamten Raffbereich in einen aufgeweiteten Zustand zum Raffen des Schlauchmaterials und zum Kalibrieren der dabei gebildeten Raupe gebracht.

Nach Beendigung des Raffvorgangs wird der Betätigungshebel 21 entgegen dem Uhrzeiger verschwenkt. Dadurch geraten die Eindrehungen 24 in den Bereich der Nockenglieder 27, und diese fallen unter der Eigenspannung der Runddrähte 15 in die Eindrehungen 24 gemäss der Darstellung in Fig. 4 und der linken Hälfte der Fig. 3 ein, wodurch sich der wirksame Querschnitt des Rohrdorns unter Beibehaltung seiner Kreisform verjüngt. In diesem Zustand kann die gebildete Schlauchraupe leicht und ohne Widerstand von dem Rohrdorn über dessen freies Ende abgezogen werden.

Zum erneuten Raffen wird der Betätigungshebel 21 im Uhrzeigersinn geschwenkt, wodurch das Steuerrohr 17 wieder nach links verschoben wird. Dabei laufen die Nockenflächen 25 des Steuerrohrs 17 an den Nockenflächen 26 der Nockenglieder 27 auf und spreizen über letztere die Runddrähte 15 erneut in den aufgeweiteten Zustand des Rohrdorns.

Das hohl ausgebildete Steuerrohr ermöglicht in bekannter Weise das Einblasen von unter erhöhtem Druck stehender Luft in den zu raffenden Darm, wozu beispielsweise am Ende des Steuerrohrs 17 ein (nichtgezeigter) Schlauchanschluss vorgesehen sein kann.

## Patentansprüche

1. Radial aufweitbarer Rohrdorn zum längsweisen Raffen von flexiblem Schlauchmaterial, insbesondere Kunstdarm für die Wurstherstellung, dadurch gekennzeichnet, dass er im Raffbereich aus einer Vielzahl um die Dornachse (28) verteilter und an ihren Längsenden parallelachsig fest eingespannter langgestreckter Federelemente (15) besteht, innerhalb welcher koaxial zur Dornachse (28) ein langgestrecktes Steuerglied (17) längsverschieblich angeordnet ist, welches bei Verschiebung von einer ersten in eine zweite Stellung über mit Längsabständen innerhalb des Dorns verteilte Nockenflächenpaare (25, 26) die Federelemente (15) zwischen ihren Einspannenden radial zur Dornachse (28) nach auswärts spreizt.

2. Rohrdorn nach Anspruch 1, dadurch gekennzeichnet, dass die Federelemente von Runddrähten (15) aus Federstahl gebildet sind.

3. Rohrdorn nach Anspruch 2, dadurch gekennzeichnet, dass an den zur Dornachse (28) weisenden Seiten der Runddrähte (15) in Längsabständen Nockenglieder (27), beispielsweise durch Schweissen oder Löten befestigt sind.

4. Rohrdorn nach Anspruch 3, dadurch gekennzeichnet, dass an jedem Nockenglied (27) zwei benachbarte Runddrähte (15) befestigt sind.

5. Rohrdorn nach einem der vorhergehenden Ansprüche, dadurch gekennzeichnet, dass das Steuerglied aus einem Rohr (17) besteht, das in Abständen Eindrehungen (24) mit die Nockenflächen bildenden beidseitigen Übergangsbereichen aufweist.

6. Rohrdorn nach einem der vorhergehenden Ansprüche, dadurch gekennzeichnet, dass die Federelemente (15) am freien Dornende durch beispielsweise Schweissen oder Löten auf einer Zentriermuffe (16) festgelegt sind, welche gleichzeitig eine Führung für das Steuerglied (17) bildet.

7. Rohrdorn nach einem der vorhergehenden Ansprüche, dadurch gekennzeichnet, dass die Federelemente (15) am Einspannende des Dorns in einer Zentrierhülse (13) durch beispielsweise Schweissen oder Löten festgelegt sind.

8. Rohrdorn nach Anspruch 7, dadurch gekennzeichnet, dass in die von der Zentrierhülse (13) umschlossenen Enden der Federelemente (15) eine Führungsbuchse (19) für das Steuerglied (17) eingesetzt ist.

9. Rohrdorn nach Anspruch 7 oder 8, dadurch gekennzeichnet, dass die Zentrierhülse (13) von der Bohrung (12) einer Halterung (10) aufgenommen ist, welche eine solche Länge besitzt, dass die zum freien Dornende weisende Stirnfläche der Halterung (10) im aufweitbaren Raffbereich des Rohrdorns liegt und eine Anschlagfläche für das zu raffende Schlauchmaterial bildet.

## Claims

1. Radially expandable tubular mandrel for the longitudinal shirring of flexible tube material, in particular artificial casings for sausage production, characterized in that in the shirring region it comprises a plurality of elongate spring elements (15) which are distributed around the mandrel axis (28), which at their longitudinal ends are securely clamped axially parallel and inside which an elongate control member (17) is arranged longitudinally displaceably coaxial with the mandrel axis (28) which control member upon displacement from a first position into a second position expands outwards radially to the mandrel axis (28) the spring elements (15) between their clamped ends by means of pair of cam faces (25, 26) spaced longitudinally apart within the mandrel.

2. Tubular mandarel according to claim 1 characterized in that the spring elements are formed by round wires (15) of spring steel.

3. Tubular mandrel according to claim 2 characterized in that cam members (27) spaced apart longitudinally are secured to the sides of the round wires (15) facing towards the mandrel axis (28), for example by welding or soldering.

4. Tubular mandrel according to claim 3, characterized in that two adjacent round wires (15) are secured to each cam member 27.

5. Tubular mandrel according to one of the preceding claims, characterized in that the control member comprises a tube (17) which at spaced locations has recessed portions (24) with transition zones on either side forming the cam faces.

6. Tubular mandrel according to one of the preceding claims, characterized in that at the free end the spring elements (15) are secured on a centering socket (16), for example by welding or soldering, which socket simultaneously forms a guide for the control member (17).

7. Tubular mandrel according to one of the preceding claims, characterized in that at the clamp end of the mandrel the spring elements (15) are secured in a centering sleeve (13), for example by welding or soldering.

8. Tubular mandrel according to claim 7, characterized in that a guide bush (19) for the control member (17) is inserted into the ends of the spring elements (15) surrounded by the centering sleeve (13).

9. Tubular mandrel according to claim 7 or 8, characterized in that the centering sleeve (13) is accommodated by the bore (12) of a holder (10) which is of such a length that the end face of the holder (10) facing towards the free mandrel end lies in the expansible gathering region of the tubular mandrel and forms a stop surface for the tubing material to be shirred.

## Revendications

1. Mandrin de plissage longitudinal de tuyaux flexibles, en particulier de boyaux artificiels pour la fabrication de saucisses, caractérisé en ce qu'il se compose, dans la zone de plissage, de plusieurs éléments élastiques allongés (15) répartis autour de l'axe du mandrin (28), montés rigidement à leurs extrémités longitudinales parallèles à l'axe, à l'intérieur desquels est disposé un organe de commande (17) qui se déplace par coulissement longitudinal et coaxial à l'axe du mandrin (28) et qui, par déplacement d'une première position en une seconde position sur des jeux de deux rampes (25, 26) réparties à des intervalles longitudinaux à l'intérieur du mandrin (15) entraîne l'écartement vers l'extérieur des éléments élastiques (15) entre leurs extrémités de fixation dans un mouvement radial par rapport à l'axe du mandrin (28).

2. Mandrin selon la revendication 1, caractérisé en ce que les éléments élastiques (15) sont constitués par des tiges métalliques à section ronde, par exemple en acier à ressort.

3. Mandrin selon la revendication 2, caractérisé en ce que des membres de came (27) sont fixés, par exemple par soudage ou brasage, à des intervalles longitudinaux sur les côtés des tiges rondes (15) orientées vers l'axe du mandrin (28).

4. Mandrin selon la revendication 3, caractérisé en ce que deux tiges rondes (15) adjacentes sont fixées à chaque membre de came (27).

5. Mandrin selon l'une quelconque des revendications précédentes, caractérisé en ce que l'organe de commande se compose d'un tube (17) qui comprend à intervalles réguliers des gorges (24) pourvues de chaque côté de zones de passage d'inclinaison constituant les plans des cames.

6. Mandrin selon l'une quelconque des revendications précédentes, caractérisé en ce que les éléments élastiques (15) sont fixés à l'extrémité libre du mandrin, par exemple par soudage ou par brasage, sur un manchon de centrage (16) qui sert également à guider l'organe de commande (17).

7. Mandrin selon l'une quelconque des revendications précédentes, caractérisé en ce que les éléments élastiques (15) sont fixés, par exemple par soudage ou par brasage, à l'extrémité de montage du mandrin, dans une douille de centrage (13).

8. Mandrin selon la revendication 7, caractérisé en ce qu'un manchon de guidage (19) pour l'organe de commande (17) est inséré dans les extrémités des éléments élastiques (15) entourées par la douille de centrage (13).

9. Mandrin selon la revendication 7 ou 8, caractérisé en ce que la douille de centrage (13) est logée dans l'alésage (12) d'un support (10) d'une longueur telle que la face frontale de support (10) orientée vers l'extrémité libre du mandrin se trouve dans la zone de plissage du mandrin et constitue une surface de butée pour les tuyaux flexibles à plisser.

FIG. 1

FIG. 2

FIG. 3

FIG. 4

FIG. 5